# EUROPÄISCHE PATENTANMELDUNG

(11) **EP 1 569 319 A2**
(43) Veröffentlichungstag der Anmeldung: **31.08.2005**
(21) Anmeldenummer: 05100600.5
(22) Anmeldetag: 31.01.2005
(51) Int. Cl.: H02K 1/14

(54) **Hauptelement für eine elektrische Maschine**

(30) Priorität: 25.02.2004 DE 102004009125
(71) Anmelder: ROBERT BOSCH GMBH, 70442 Stuttgart (DE)
(72) Erfinder: EVANS, Steven Andrew, 77813, Buehl (DE)

(57) **Zusammenfassung**

Es wird ein als Stator oder Rotor eingesetztes Hauptelement einer elektrischen Maschine angegeben, das ein aus SMC-Material hergestelltes Rückschlussjoch (11) und damit einstückige, am Rückschlussjoch um gleiche Umfangswinkel gegeneinander versetzte Zähne (12) aufweist. Jeder Zahn (12) besitzt einen vom Rückschlussjoch (11) radial abstehenden Zahnschaft (13) und einen am jochfernen Ende des Zahnschaftes (13) allseits über diesen überstehenden Zahnschuh (14). Zur Erzielung eines minimalen Rastmoments des Motors bei Sicherstellung einer einfachen Fertigung und Montage des Hauptelements sind die Zahnschuhe (14) als identische, gleichschenklige Trapeze ausgeformt, die an aufeinanderfolgenden Zähnen (12) so ausgerichtet sind, dass einander zugekehrte Trapezschenkel mit Spaltabstand parallel zueinander verlaufen (Fig. 1).

## Beschreibung

### Stand der Technik

Die Erfindung geht aus von einem als Stator oder Rotor eingesetzten Hauptelement einer elektrischen Maschine nach dem Oberbegriff des Anspruchs 1.

Die magnetisch leitfähigen Körpern von Statoren oder Rotoren elektrischer Maschinen werden zunehmend aus SMC-Material (Soft Magnetic powder iron Composite) hergestellt und verdrängen in einigen Bereichen die laminierten Blechpakete, da sie fertigungstechnisch sehr viel einfacher herstellbar sind. Das SMC-Material wird mittels einer Pressform in die gewünschte Form gebracht und dann bei einer relativ niedrigen Temperatur wärmebehandelt, damit die notwendigen isolierenden Schichten zwischen den Pulverpartikeln nicht zerstört werden.

Bei einem bekannten mehrpoligen Stator aus SMC-Material für eine Innenläufermaschine (WO 99/50949) ist das außenliegende Rückschlussjoch aus einer der Zähnezahl der Statorzähne entsprechenden Anzahl von Jochsegmenten zusammengesetzt.

Jedes Jochsegment trägt einstückig einen Statorzahn mit einem Zahnschaft und einem den Zahnschaft an dessen jochfernem Ende begrenzenden Zahnschuh. Jedes Jochsegment mit Zahnschaft und Zahnschuh ist aus SMC-Material durch Pressen und Wärmebehandlung hergestellt. Die Zahnschäfte sind an ihren axialen Enden abgerundet oder weisen ein ovales Profil auf, so dass infolge Wegfall von scharfen Kanten an den Zahnschäften nur eine dünne Isolierschicht aufgebracht werden muss, auf die dann die Statorwicklung aufgewickelt werden kann. Die einzelnen Wicklungen der Statorwicklung werden direkt auf die Zahnschäfte mit herkömmlicher, maschineller Wickeltechnik aufgewickelt. Nach Bewickeln werden die einzelnen Jochsegmente in Umfangsrichtung aneinandergesetzt und fest miteinander verbunden.

Bei einem ebenfalls bekannten Stator aus SMC-Material für eine Innenläufermaschine (WO 00/69047) werden das ringförmige Rückschlussjoch einerseits und die Statorzähne mit Zahnschaft und Zahnschuh andererseits getrennt aus SMC-Material in der gewünschten Form hergestellt. Nach Aufschieben der als Ringspulen vorgefertigten Wicklungen auf die Zahnschäfte werden die Statorzähne mit ihren zahnschuhfernen Enden in vorbereitete Ausnehmungen im Rückschlussjoch formschlüssig eingesetzt und an diesem befestigt.

In einigen Einsatzgebieten für elektrische Motoren, z.B. in Werkzeugmaschinen oder sog. Robotics, werden Motoren, z.B. permanentmagneterregte Kommutatormotoren oder bürstenlose, permanentmagneterregte Synchronmotoren, gefordert, die ein möglichst kleines Rastmoment aufweisen. Die Reduktion des Rastmoments wird üblicherweise durch ein Schrägen der die Motorwicklung aufnehmenden Nuten bzw. der die Nuten begrenzenden Zähne des Hauptelements erzielt, wobei meist die Schrägung eine halbe oder ganze Nutteilung beträgt. Bei herkömmlichen Hauptelementen, bei denen der magnetisch leitfähige Körper, also der Rückschlussring mit angeformten Zähnen, aus einem lamellierten Blechpaket besteht, wird eine solche Nutschrägung sehr einfach durch sukzessives Verdrehen der in Achsrichtung hintereinander angeordneten Blechlamellen gegeneinander erreicht. Bei einem aus SMC-Material hergestellten, magnetisch leitfähigen Körper des Hauptelements ist der Schrägungsprozess fertigungstechnisch sehr viel aufwendiger und teurer, da eine Schrägung das Zusammensetzten der getrennt aus SMC-Material gepressten Teile beträchtlich erschwert.

### Vorteile der Erfindung

Das erfindungsgemäße Hauptelement einer elektrischen Maschine mit den Merkmalen des Anspruch 1 hat den Vorteil, dass durch die erfindungsgemäße Ausbildung der Zahnschuhe als gleichschenklige Trapeze einerseits ein Schrägungseffekt zur Unterdrückung des Rastmoments erreicht wird und andererseits der magnetisch leitfähige Körper aus Rückschlussjoch und Zähnen aus nur wenigen Teilen hergestellt werden kann, die einfach und fertigungstechnisch vorteilhaft miteinander gefügt werden können.

Durch die in den weiteren Ansprüchen aufgeführten Maßnahmen sind vorteilhafte Weiterbildungen und Verbesserungen des im Anspruch 1 angegebenen Hauptelements einer elektrischen Maschine möglich.

Gemäß einer bevorzugten Ausführungsform der Erfindung ist das Rückschlussjoch aus zwei axial aneinanderliegenden Jochteilen zusammengesetzt, wobei jedes Jochteil die halbe Anzahl der Zähne trägt, die in jedem Jochteil den doppelten Umfangswinkelversatz zueinander aufweisen wie die Zähne am kompletten Rückschlussjoch. In jedem Jochteil sind dabei die trapezförmigen Zahnschuhe so ausgerichtet, dass die größere Grundlinie der Trapeze von dem anderen Jochteil abgekehrt ist. Diese konstruktive Gestaltung hat den Vorteil, dass der magnetisch leitfähige Körper des Hauptelements aus zwei identisch geformten Körpermodulen zusammengesetzt ist, so dass für beide Körpermodule dieselbe Pressform bzw. dasselbe Presswerkzeug verwendet werden kann. Das Fügen der baugleichen Körpermodule zum magnetisch leitfähigen Körper des Hauptelements erfolgt in axialer Richtung, wobei der eine Körpermodul um 180 ° gegenüber dem anderen Körpermodul gewendet an den anderen Körpermodul axial fluchtend angesetzt wird und die beiden aneinanderliegenden Stirnseiten der Jochteile miteinander fest verbunden werden.

### Zeichnung

Die Erfindung ist anhand von in der Zeichnung dargestellten Ausführungsbeispielen in der nachfolgenden Beschreibung näher erläutert. Es zeigen:
- Fig. 1: eine perspektivische Darstellung eines als Stator eines Innenläufermotors eingesetzten Hauptelements einer elektrischen Maschine,
- Fig. 2: eine Explosionsdarstellung des Hauptelements in Fig. 1,
- Fig. 3: ein Diagramm mit drei Graphen des Verlaufs des Rastmoments in Abhängigkeit von dem Drehwinkel des Läufers bei einem vierpoligen Innenläufermotor mit sechs Zähnen im Stator für drei konstruktiv unterschiedlich Motorvarianten,
- Fig. 4: eine Explosionszeichnung eines als Stator eines Außenläufermotors eingesetzten Hauptelements einer elektrischen Maschine.

### Beschreibung der Ausführungsbeispiele

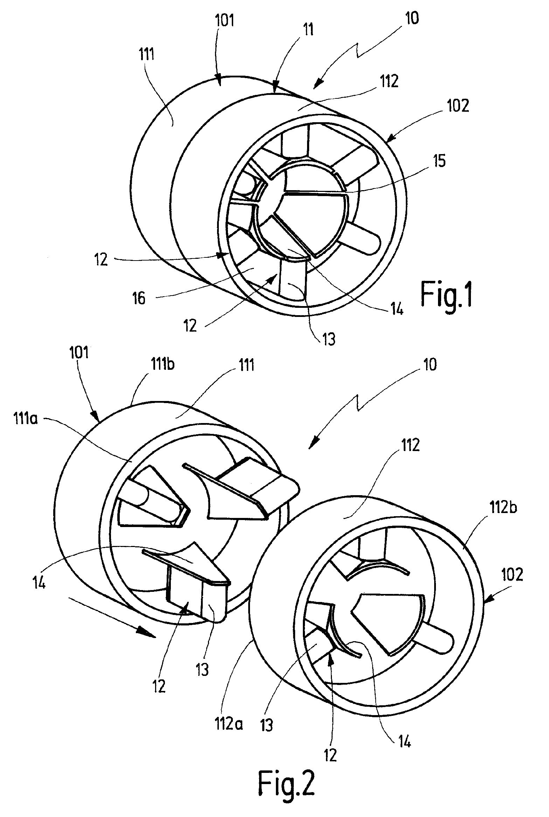

In Fig. 1 und 2 ist das als Stator eingesetzte Hauptelement eines dreiphasigen, vierpoligen, bürstenlosen Innenläufer-Gleichstrommotors dargestellt. Der Stator weist einen magnetisch leitfähigen Statorkörper 10, der aus einem zylinder- oder ringförmigen Rückschlussjoch 11 und sechs mit diesem einstückig verbundenen, um gleiche Umfangswinkel gegeneinander versetzten Zähne 12 besteht, sowie eine hier nicht dargestellte Statorwicklung auf. Jeder Zahn 12 hat einen vom Rückschlussjoch 11 radial nach innen abstehenden Zahnschaft 13 und einem am jochfernen Ende des Zahnschaftes 13 allseits über diesen überstehenden Zahnschuh 14. Die Statorwicklung besteht aus einzelnen Ringspulen, die auf die Zähne 12 aufgewickelt sind und die zwischen den Zähnen 12 sich ausbildenden Nuten 16, die radial von den Polschuhen 14 und dem Rückschlussjoch 11 begrenzt sind, mit einem hohen Füllfaktor ausfüllen. Der Statorkörper 10 ist aus zwei identisch ausgebildeten Körpermodulen 101 und 102 gefügt. Hierzu ist das Rückschlussjoch 11 in zwei Jochteile 111 und 112 unterteilt, die axial stirnseitig aneinanderliegen und fest miteinander verbunden sind.

Wie aus der Explosionsdarstellung in Fig. 2 hervorgeht, weisen beide Jochteile 111, 112 eine gleiche axiale Breite auf und jeder Jochteil 111 bzw. 112 trägt die halbe Anzahl der Zähne 12 also jeweils drei Zähne 12, die in jedem Jochteil 111, 112 den doppelten Umfangswinkelversatz zueinander aufweisen wie die Zähne 12 in dem zusammengesetzten Rückschlussjoch 11. Bei insgesamt sechs vorhandenen Zähnen 12, die gegeneinander um 60° in Umfangsrichtung am Rückschlussjoch 11 versetzt sind, trägt jeder Jochteil 111 bzw. 112 drei Zähne 12, die jeweils um 120° in Umfangsrichtung des Jochteils 111 bzw. 112 gegeneinander versetzt sind. Die Zahnschäfte 13 besitzen einen über die Radialhöhe konstanten Querschnitt und sind am jeweiligen Jochteil 111 bzw. 112 axial ausgerichtet. Sie stehen in jedem Jochteil 111 bzw. 112 über die einander zugekehrten Stirnseiten 111a und 112a der Jochteile 111, 112 axial soweit vor, dass bei aneinanderliegenden Jochteilen 111, 112 die Vorstehabschnitte der Zahnschäfte 13 an dem einen Jochteil 111 bzw. 112 in das jeweils andere Jochteil 112 bzw. 111 hineinragen, so dass die Zahnschäfte 13 sich über die gesamte axiale Breite des Rückschlussjochs 11 erstrecken und mit Axialabstand vor den Stirnseiten 111b und 112b des jeweilig anderen Jochteils 112 bzw. 111 enden. Einen gleichen axialen Abstand weisen die einstückig mit dem Jochteil 111 bzw. 112 verbundenen Zähne 12 von deren Stirnseiten 111b bzw. 112b auf, so dass bei zum Rückschlussjoch 11 miteinander verbundenen Jochteilen 111, 112 die Stirnenden der Zahnschäfte 13 miteinander fluchten. Die an den jochfernen Enden der Zahnschäfte 13 angeordneten Zahnschuhe 14 stehen allseits über die Zahnschäfte 13 vor, was einerseits eine Flusskonzentration in den Zahnschäften 13 bewirkt und andererseits zur Abstützung der auf die Zahnschäfte 13 aufgewickelten Statorwicklung dient. Die Bewicklung der Zahnschäfte 13 erfolgt vor Zusammenfügen der beiden Körpermodule 101, 102. Die beiden Jochteile 111, 112 werden über ihre aneinanderliegenden Stirnseiten 111a und 112a unlösbar miteinander zum Rückschlussjoch 11 verbunden.

Die beiden identische ausgebildeten Körpermodule 101, 102 des magnetisch leitfähigen Statorkörpers 10 mit dem Jochteil 111 bzw. 112 und den daran einstückig sitzenden Zahnschäften 13 und Zahnschuhen 14 werden aus SMC-Material (Soft Magnetic powder iron Composite) hergestellt, wobei das SMC-Eisenpulver mittels einer Pressform in die in Fig. 2 zu sehende Form gepresst und anschließend für ca. 30 min. einer Temperatur von ca. 500°C ausgesetzt wird. Da die Form der beiden Körpermodule 101, 102 identisch ist, ist nur eine Pressform zur Herstellung beider erforderlich, so dass sich eine für die Fertigung günstige hohe Stückzahl ergibt.

Um das durch die Zahnung hervorgerufene Rastmoment des Motors möglichst klein zu halten und gleichzeitig das einfache axiale Fügen der beiden Jochteile 111, 112 im Fertigungsprozess beibehalten zu können, sind alle Zahnschuhe 14 als identische, gleichschenklige Trapeze ausgeformt, die bei zum Rückschlussjoch 11 vereinigten Jochteilen 111, 112 an aufeinanderfolgenden Zähnen 12 so ausgerichtet sind, dass einander zugekehrte Trapezschenkel mit Spaltabstand parallel zueinander verlaufen (Fig. 1). Um dies zu erreichen sind in jedem Jochteil 111 bzw. 112 die trapezförmigen Zahnschuhe 14 gleich ausgerichtet, und zwar so, dass ihre längeren Grundlinien von dem anderen Jochteil 112 bzw. 111 abgekehrt sind und in Umfangsrichtung miteinander fluchten. Werden die beiden Jochteile 111, 112 axial so gefügt, dass die Stirnseiten 111a und 112a einander zugekehrt sind, also der eine Jochteil 112 gegenüber dem anderen Jochteil 111 um 180° gewendet ist, so schieben sich nach einer Verdrehung der beiden Jochteile 111, 112 um eine halbe Zahnteilung in Umfangsrichtung bei axialem Aneinanderschieben der beiden Jochteile 111, 112 die Zahnschuhe 14 an dem einen Jochteil 111 bzw. 112 mit den kürzeren Grundlinien der Trapeze zwischen die trapezförmigen Zahnschuhe 14 am anderen Jochteil 112 bzw. 111, bis bei aneinanderliegenden Stirnseiten 111a und 112a der Jochteile 111, 112 die in Fig. 1 zu sehende Anordnung und Ausrichtung der trapezförmigen Zahnschuhe 14 erreicht ist. Die Grundlinien der Trapeze aller Zahnschuhe 14 fluchten in Umfangsrichtung und die einander zugekehrten Trapezschenkel der Zahnschuhe 14 begrenzen einen Parallelspalt 15 wobei aufeinanderfolgende Parallelspalte 15 einmal in Drehrichtung und einmal gegen Drehrichtung geschrägt sind.

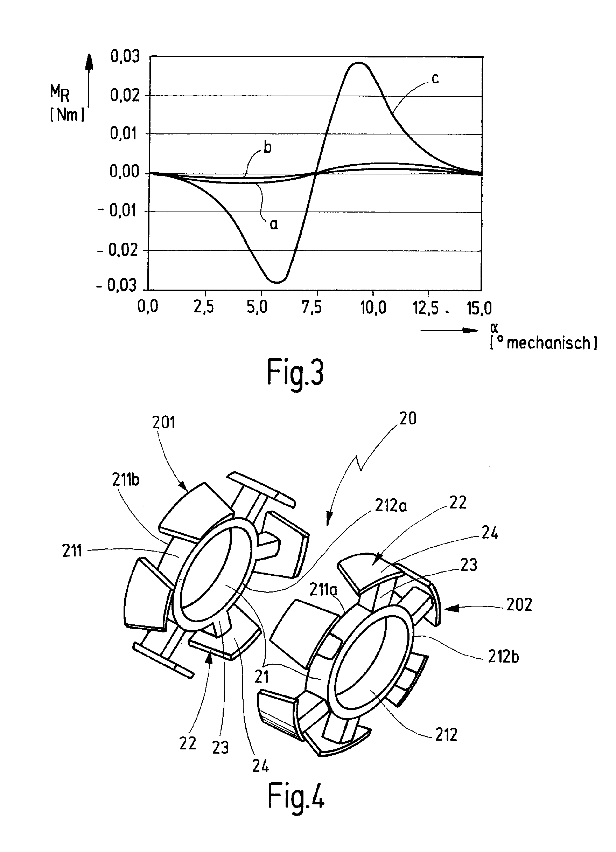

Das an einem vierpoligen, bürstenlosen Innenläufermotor mit dem nach Fig. 1 ausgebildeten Stator gemessene Rastmoment über den mechanischen Winkel ist im Diagramm der Fig. 3 durch die Kurve a dargestellt. Zum Vergleich zeigt die Kurve b das Rastmoment eines gleichen elektrischen Motors mit einem als lamelliertes Blechpaket aufgebauten Stator mit herkömmlicher Nutschrägung durch Verdrehen der einzelnen Blechlamellen. Kurve c zeigt den Rastmomentverlauf eines gleichen Motors, bei dem auf eine Nutschrägung verzichtet worden ist. Deutlich ist zu sehen, dass mit der erfindungsgemäßen Ausbildung der Zahnschuhe 14 ein nahezu gleich stark reduziertes Rastmoment erreicht wird wie bei herkömmlicher Nutschrägung.

In Fig. 4 ist der Statorkörper 20 eines Stators eines z.B. achtpoligen, bürstenlosen Außenläufer-Gleichstrommotors als Ausführungsbeispiel für ein modifiziertes Hauptelement dargestellt. Der hier nicht gezeigte Rotor ist von herkömmlicher Bauart und weist einen massiven oder lamellierten Außenring auf, der an seiner dem Stator zugekehrten Innenfläche z.B. acht Permanentmagnetsegmente trägt, die um gleiche Umfangswinkel gegeneinander versetzt angeordnet und abwechselnd gegensinnig polarisiert sind. Der in Fig. 4 in Explosionsdarstellung gezeigte magnetisch leitfähige Statorkörper 20 des Stators weist ein ringförmiges Rückschlussjoch 21 und insgesamt zwölf Zähne 22 auf, die um gleiche Umfangswinkel zueinander versetzt am Rückschlussjoch 21 mit diesem einstückig angeordnet sind. Jeder Zahn 22 weist einen vom Rückschlussjoch 21 radial nach außen abstehenden Zahnschaft 23 und einen am jochfernen Ende des Zahnschaftes 23 angeordneten Zahnschuh 24 auf, der - wie in Fig. 1 und 2 beschrieben - als gleichschenkliges Trapez ausgebildet ist. Der Statorkörper 20 ist wiederum in zwei identische Körpermodule 201, 202 unterteilt, wobei jedes Körpermodul 201 bzw. 202 ein Jochteil 211 mit halber Axialbreite des Rückschlussjoches 21 und die halbe Anzahl von Zähne 22 besitzt, die um gleiche Umfangswinkel zueinander versetzt sind, und zwar um einen Versatzwinkel, der doppelt so groß ist wie der Versatzwinkel zwischen den Zähnen 22 am Rückschlussjoch 21. Die beiden Körpermodule 201, 202 sind wiederum aus SMC-Material gefertigt und in Axialrichtung zusammengefügt, so dass die Stirnseiten 211a und 212a der beiden Jochteile 211 und 212 aneinanderliegen und fest miteinander verbunden sind.

Die Zahnschäfte 23 der Zähne 22 weisen eine der axialen Breite des jeweiligen Jochteils 211 bzw. 212 entsprechende Schaftbreite auf. Die Zahnschuhe 24 sind asymmetrisch so an den Zahnschäften 23 angeordnet, dass sie bei aneinanderliegenden Jochteilen 211, 212 jeweils in das andere Jochteil 212, 211 hineinragen, wobei die in Umfangsrichtung sich erstreckenden Grundlinien der Trapeze der Zahnschuhe 24 miteinander fluchten und die Trapezschenkel benachbarter Zähne 22 parallel mit Spaltabstand zueinander verlaufen.
Auch bei dem Statorkörper 20 in Fig. 4 werden nach Bewicklung der Zahnschäfte 13 der einzelnen Körpermodule 201, 202 mit den einzelnen Ringspulen der Statorwicklung die beiden Körpermodule 201, 202 in Achsrichtung aneinandergesetzt, wobei die trapezförmigen Zahnschuhe 24 sich ineinanderschieben, bis die beiden Jochteile 211, 212 aneinanderliegen und über ihre kongruenten Stirnseiten 211a, 212a fest miteinander verbunden sind.

Die Erfindung ist nicht auf das beschriebene Ausführungsbeispiel eines Stators beschränkt. Sie kann ebenfalls in einem Rotor oder Läufer einer elektrischen Maschine eingesetzt werden, z.B. in dem Rotor oder Anker eines Gleichstrommotors mit Kommutator.

## Patentansprüche

1. Als Stator oder Rotor eingesetztes Hauptelement einer elektrischen Maschine, mit einem aus SMC-Material hergestellten Rückschlussjoch (11; 21) und damit einstückigen, am Rückschlussjoch (11; 21) um gleiche Umfangswinkel gegeneinander versetzten Zähnen 12; 22), die jeweils einen vom Rückschlussjoch (11; 21) radial abstehenden Zahnschaft (13; 23) und einen am jochfernen Ende des Zahnschaftes (13; 23) allseits über diesen überstehenden Zahnschuh (14; 24) aufweisen, **dadurch gekennzeichnet, dass** die Zahnschuhe (14; 24) als identische, gleichschenklige Trapeze ausgeformt sind, die an aufeinanderfolgenden Zähnen (12; 22) so ausgerichtet sind, dass einander zugekehrte Trapezschenkel mit Spaltabstand parallel zueinander verlaufen.

2. Hauptelement nach Anspruch 1, **dadurch gekennzeichnet, dass** das Rückschlussjoch (11; 21) aus zwei axial aneinanderliegenden Jochteilen (111, 112; 211, 212) zusammengesetzt ist und jedes Jochteil (111 bzw. 112; 211 bzw. 212) die halbe Anzahl der Zähne (12; 22) trägt, die in jedem Jochteil (111 bzw. 112; 211 bzw. 212) den doppelten Umfangswinkelversatz zueinander aufweisen, und dass in jedem Jochteil (111 bzw. 112; 211 bzw. 212) die trapezförmigen Zahnschuhe (14; 24) so ausgerichtet sind, dass die größere Grundlinie der Trapeze von dem anderen Jochteil (112 bzw. 111; 212 bzw. 211) abgekehrt ist.

3. Hauptelement nach Anspruch 2, **dadurch gekennzeichnet, dass** die Zahnschäfte (13) in jedem Jochteil (111 bzw. 112) über dessen dem anderen Jochteil (112 bzw. 111) zugekehrte Stirnseite (111a bzw. 112a) axial soweit vorstehen, dass bei aneinanderliegenden Jochteilen (111, 112) die Zahnschäfte (13) sich über die axiale Breite des Rückschlussjochs (11) erstrecken und vorzugsweise mit Axialabstand vor den voneinander abgekehrten Stirnseiten (111b, 112b) des Rückschlussjochs (11) enden.

4. Hauptelement nach Anspruch 2, **dadurch gekennzeichnet, dass** die Zahnschäfte (23) der Zähne (22) eine der axialen Breite des jeweiligen Jochteils (211 bzw. 212) entsprechende axiale Schaftbreite aufweisen und dass die trapezförmigen Zahnschuhe (24) asymmetrisch so an den Zahnschäften (23) angeordnet sind, dass bei aneinanderliegenden Jochteilen (211, 212) die in Umfangsrichtung sich erstreckenden Grundlinien der Trapeze miteinander fluchten.

5. Hauptelement nach einem der Ansprüche 2 - 4, **dadurch gekennzeichnet, dass** jedes Jochteil (111 bzw. 112; 211 bzw. 212) eine gleiche axiale Breite aufweist, die halb so groß ist, wie die Axialbreite des Rückschlussjochs (11 bzw. 21).
